(19) Europäisches Patentamt
European Patent Office
Office européen des brevets

(11) Veröffentlichungsnummer: **0 138 761**
**B1**

(12) # EUROPÄISCHE PATENTSCHRIFT

(45) Veröffentlichungstag der Patentschrift: **22.03.89**

(51) Int. Cl.⁴: **C 09 B 29/32**

(21) Anmeldenummer: **84810437.8**

(22) Anmeldetag: **10.09.84**

(54) **Verfahren zum Pigmentieren von hochmolekularem organischem Material.**

(30) Priorität: **14.09.83 CH 5008/83**

(43) Veröffentlichungstag der Anmeldung: **24.04.85 Patentblatt 85/17**

(45) Bekanntmachung des Hinweises auf die Patenterteilung: **22.03.89 Patentblatt 89/12**

(84) Benannte Vertragsstaaten: **CH DE FR GB IT LI**

(56) Entgegenhaltungen:
**EP-A- 0 051 560**
**DE-C- 600 101**
**US-A- 2 014 487**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Hari, Stefan, Dr., Ch. de la Redoute 7, CH-1752 Villars-sur-Glâne (CH)**

**EP 0 138 761 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Aus der DE-PS-600 101 sind wasserunlösliche Azofarbstoffe bekannt, die durch Kuppeln eines Acylessigsäureamids der Formel

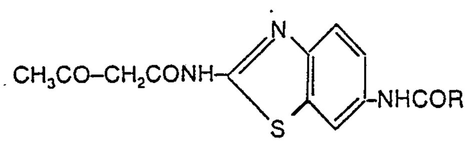

,

worin R Phenyl bedeutet, mit Diazokomponenten der aromatischen Reihe, die keine wasserlöslich machenden Gruppen enthalten, erhältlich sind. Diese Farbstoffe zeichnen sich, auf der Faser (z. B. Baumwollgarn) hergestellt, durch gute Chlor- und Lichtechtheit aus.

Es ist nun gefunden worden, daß man ausgehend von Acylessigsäureamiden der obenerwähnten Formel, worin R Alkyl oder Cycloalkyl bedeutet, ganz unerwartet sehr wertvolle Pigmente erhalten kann, die sich insbesondere durch eine sehr hohe Wetterbeständigkeit auszeichnen.

Die vorliegende Erfindung betrifft demnach Monoazopigmente der Formel I

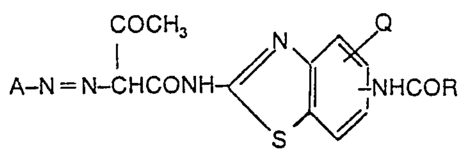

(I),

worin A einen Rest der Formel

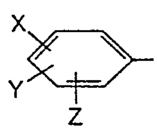

bedeutet, worin X und Y Wasserstoff- oder Halogenatome, Nitro-, Cyan-, Carbamoyl- oder Sulfamoylgruppen, Alkyl-, Alkoxy-, Alkylsulfonyl-, Alkoxycarbonyl-, Alkanoyl-, Alkoxysulfonyl- oder Alkylsulfamoylgruppen, enthaltend 1–6 Kohlenstoffatome, gegebenenfalls durch Halogenatome, Alkyl- oder Alkoxygruppen, enthaltend 1–4 Kohlenstoffatome, oder Trifluormethylgruppen substituierte Phenoxy-, Phenylsulfonyl-, Phenoxycarbonyl-, Benzoyl- oder Phenylsulfamoylgruppen und Z ein Wasserstoff- oder Halogenatom oder eine Alkylgruppe, enthaltend 1–4 Kohlenstoffatome, bedeuten, R eine $C_1$–$C_6$-Alkyl- oder $C_5$–$C_8$-Cycloalkylgruppe und Q ein H- oder Halogenatom oder eine Methylgruppe bedeuten.

Die Monoazoverbindungen der Formel I erhält man dadurch, daß man ein diazotiertes carbocyclisches, aromatisches Amin der Formel II

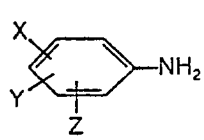

(II),

worin X, Y und Z die oben angegebene Bedeutung haben, mit einem Acetoacetylamino-benzthiazol der Formel III

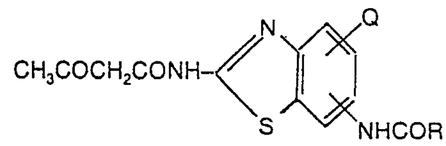

(III)

kuppelt, wori Q und R die oben angegebene Bedeutung haben.

Als Beispiele von Aminen der Formel II seien genannt:

Aniline, wie
2-, 3- oder 4-Chloraniline,
3,4-Dichloranilin, 2,3-Dichloranilin,
2,4-Dichloranilin, 2,5-Dichloranilin,
2,6-Dichloranilin, 2,4,5,-Trichloranilin,
2,4,6-Trichloranilin,
2-, 3- oder 4-Bromanilin,
2,4-Dibromanilin, 2,5-Dibromanilin,
2-Methyl-5-chloranilin,
2-Methyl-4-chloranilin,
2-Methyl-3-chloranilin,
2-Chlor-5-trifluormethylanilin,
alkylierte Aniline wie
2-, 3- oder 4-Methylanilin,
4-tert.-Butylanilin, 2,4-Dimethylanilin,
sowie Nitroaniline, z. B.
2-, 3- oder 4-Nitroaniline,
4-Chlor-2-nitroanilin,
2-Chlor-4-nitroanilin,
4-Methyl-3-nitroanilin,
2,4-Dimethyl-3-nitroanilin,
2-Methyl-5-nitroanilin,
2-Methyl-4-nitroanilin, ferner
Alkoxyaniline und Phenoxyaniline, z. B.
2- und 4-Methoxyanilin,
2- und 4-Äthoxyanilin,
3-Chlor-4-methoxyanilin,
2-Methoxy-5-nitroanilin,
2-Methoxy-5-chloranilin,
2-Methoxy-5-trifluormethylanilin,
2-Amino-4-trifluormethyl-4′-chlordiphenyläther,
2-Nitro-4-äthoxyanilin,
2-Methoxy-4-chlor-5-methylanilin,
2-Amino-4-chlordiphenyläther,
2-Amino-2′,4-dichlordiphenyläther,
2-Amino-4,4′-dichlordiphenyläther,
sowie Aminobenzoesäureester, wie
Anthranilsäuremethyl-, äthyl- oder isopropylester
Anthranilsäurephenylester
Anthranilsäure-p-chlorphenylester
Anthranilsäure-p-methoxycarbonyl-phenylester
1-Amino-4-chlor-2-benzoesäuremethylester
1-Amino-4-nitro-2-benzoesäuremethylester
1-Amino-3-benzoesäuremethylester
1-Amino-3-benzoesäurephenylester
1-Amino-2-chlor-5-benzoesäuremethylester
1-Amino-2-chlor-4-benzoesäure-phenylester
1-Amino-2-methyl-3-benzoesäurephenylester
1-Amino-2-methyl-5-benzoesäureäthylester
1-Amino-2-methyl-5-benzoesäurepropylester

1-Amino-2-methyl-5-benzoesäureisopropylester
1-Amino-2-methyl-5-phenylester
1-Amino-2-methyl-5-o-, m- oder p-methylphenylester
1-Amino-2-methyl-5-3'-,5'-dimethylphenylester
Amino-terephthalsäuredimethylester
Amino-terephthalsäure-di-isopropylester
Amino-terephthalsäure-diphenylester
ferner Aminobenzoesäureamide, wie
Anthranilsäureamid,
1-Amino-2-chlor-5-benzoesäureamid,
1-Amino-2-methyl-5-benzoesäureamid.

Die Acetoacetylaminobenzthiazole der Formel III erhält man durch Umsetzen der entsprechenden 2-Aminobenzthiazole mit Diketen. Als Beispiele von Acetoacetylaminobenzthiazolen seien genannt:
2-Acetoacetylamino-6-acetylamino-benzthiazol
2-Acetoacetylamino-6-propionylamino-benzthiazol
2-Acetoacetylamino-6-butyrylamino-benzthiazol
2-Acetoacetylamino-6-iso-butyrylamino-benzthiazol
2-Acetoacetylamino-5-acetylamino-benzthiazol
2-Acetoacetylamino-4-acetylamino-benzthiazol
2-Acetoacetylamino-7-acetylamino-benzthiazol.

Die Kupplung des diazotierten Amins mit den Acetoacetylamino-benzthiazolen findet vorzugsweise in schwach saurem Medium statt, zweckmässig in Gegenwart gebräuchlicher, die Kupplung fördernder Mittel. Als solche seien insbesondere Dispergiermittel genannt, beispielsweise Aralkylsulfonate, wie Dodecylbenzolsulfonat, oder 1,1'-Dinaphthylmethan-2,2'-disulfonsäure oder Polykondensationsprodukte von Alkylenoxiden. Die Dispersion der Kupplungskomponente kann auch vorteilhaft Schutzkolloide, beispielsweise Methylcellulose oder kleinere Mengen inerter, in Wasser schwer löslicher oder unlöslicher organischer Lösungsmittel enthalten, beispielsweise gegebenenfalls halogenierte oder nitrierte aromatische Kohlenwasserstoffe, wie Benzol, Toluol, Xylol, Chlorbenzol, Dichlorbenzol oder Nitrobenzol, sowie aliphatische Halogenkohlenwasserstoffe, wie z. B. Tetrachlorkohlenstoff oder Trichloräthylen, ferner mit Wasser mischbare organische Lösungsmittel, wie Aceton, Methyläthylketon, Methanol, Äthanol oder Isopropanol.

Schließlich kann die Kupplung auch so vollzogen werden, daß man die Diazokomponente mit der Kupplungskomponente in einem organischen Lösungsmittel suspendiert und mit einem diazotierten Mittel, insbesondere einem Ester der Salpetersäure, wie Methyl-, Äthyl-, Butyl-, Amyl- oder Octylnitrit behandelt.

Die Monoazoverbindungen der Formel I können auch durch Kondensation eines Aminoazofarbstoffes der Formel IV

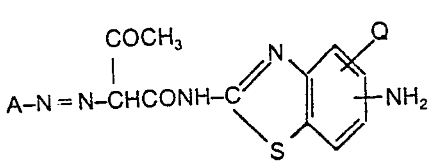
(IV),

mit einem Säurechlorid der Formel RCOCl oder einem Säureanhydrid der Formel $(RCO)_2O$, worin R die angegebene Bedeutung hat, erhalten werden. Die Aminoazofarbstoffe der Formel IV können aus den entsprechenden Nitroazofarbstoffen durch Reduktion erhalten werden.

Die erhaltenen Pigmente fallen zumeist schon in der Hitze aus und können durch Abfiltrieren und gegebenenfalls durch Waschen mit organischen Lösungsmitteln in reiner Form isoliert werden.

Die erhaltenen Pigmente besitzen im allgemeinen eine gute Textur und können meistens als Rohprodukte verwendet werden. Falls nötig oder erwünscht, kann man die Rohprodukte durch Mahlen oder Kneten in eine feindisperse Form überführen. Dabei werden zweckmäßig Mahlhilfsmittel, wie anorganische und/oder organische Salze in Gegenwart oder Abwesenheit organischer Lösungsmittel verwendet. Nach dem Mahlen werden Hilfsmittel wie üblich entfernt, lösliche anorganische Salze z. B. mit Wasser und wasserunlösliche organische Hilfsmittel beispielsweise durch Wasserdampfdestillation.

Auch durch Behandeln der Rohpigmente mit organischen Lösungsmitteln, vorzugsweise solchen, die über 60 °C sieden, kann oft eine Verbesserung der Eigenschaften erreicht werden. Als besonders geeignet erweisen sich durch Halogenatome, Alkyl- oder Nitrogruppen substituierte Benzole, wie Xylole, Chlorbenzol, o-Dichlorbenzol oder Nitrobenzol, sowie Pyridinbasen, wie Pyridin, Picolin oder Chinolin, ferner Ketone, wie Cyclohexanon, Methyl-isobutylketon, Acetylaceton, Äther, wie Äthylenglykolmonomethyl- oder -monoäthyläther, Amide, wie Dimethylformamid oder N-Methyl-pyrrolidon, Säuren, wie Ameisensäure oder Essigsäure, Alkohole, wie Methylalkohol, Äthylalkohol, Propylalkohol, Isopropylalkohol, Butylalkohol, Isobutylalkohol, Alkohol-Wasser-Mischungen sowie Dimethylsulfoxid oder Wasser ohne oder unter Druck.

Die Nachbehandlung erfolgt vorzugsweise durch Erhitzen des Pigments im Lösungsmittel auf 60 bis 180 °C, wobei in vielen Fällen eine Kornvergröberung eintritt, was sich günstig auf die Licht- und Migrationsechtheit der erhaltenen Pigmente auswirkt.

Je nach Verwendungszweck erweist es sich als vorteilhaft, die Pigmente als Toner oder in Form von Präparaten zu verwenden.

Das erfindungsgemäß zu färbende hochmolekulare organische Material kann natürlicher oder künstlicher Herkunft sein. Es kann sich z. B. um Naturharze oder trocknende Öle, Kautschuk oder Casein oder um abgewandelte Naturstoffe, wie Chlorkautschuk, ölmodifizierte Alkydharze, Viscose, um Celluloseäther oder Ester, wie Celluloseacetat, Cellulosepropionat, Celluloseacetobutyrat oder Nitrocellulose handeln, insbesondere aber um vollsynthetische organische Polymere (Duroplast und Thermoplaste), wie sie durch Polymerisation, Polykondensation oder Polyaddition erhalten werden. Aus der Klasse der Polymerisationsharze seien in erster Linie genannt: Polyolefine,

wie Polyäthylen, Polypropylen oder Polyisobutylen, ferner substituierte Polyolefine, wie Polymerisate aus Vinylchlorid, Vinylactat, Styrol, Acrylnitril, Acrylsäure und/oder Methacrylsäureester oder Butadien, sowie Copolymerisate der erwähnten Monomeren, insbesondere ABS oder EVA.

Aus der Reihe der Polyadditionssalze und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wie z. B. Alkydharze, als auch ungesättigte, wie beispielsweise Maleinatharze, ferner die linearen Polyester und Polyamide oder Silikone genannt.

Die erwähnten hochmolekularen Verbindungen können einzeln oder in Gemischen, als plastische Massen oder Schmelzen, die gegebenenfalls zu Fasern versponnen werden können, vorliegen.

Sie können auch in Form ihrer Monomeren oder im polymerisierten Zustand in gelöster Form als Filmbildner oder Bindemittel für Lacke oder Druckfarben vorliegen, wie z. B. Leinölfirnis, Nitrocellulose, Alkydharze, Melaminharze und Harnstoff-Formaldehydharze oder Acrylharze.

Die Pigmentierung der hochmolekularen, organischen Substanzen mit den Pigmenten der Formel I erfolgt beispielsweise derart, daß man ein solches Pigment gegebenenfalls in Form von Masterbatches, diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Giessen oder durch Spritzguß in die gewünschte endgültige Form gebracht. Oft ist es erwünscht, zur Herstellung von nicht starken Formlingen oder zur Verringerung ihrer Sprödigkeit, den hochmolekularen Verbindungen vor der Verformung sogenannte Weichmacher einzuverleiben. Als solche können z. B. Ester der Phosphorsäure, Phthalsäure oder Sebacinsäure dienen. Die Weichmacher können im erfindungsgemäßen Verfahren vor oder nach der Einverleibung des Pigmentfarbstoffes in die Polymeren eingearbeitet werden. Es ist ferner möglich, zwecks Erzielung verschiedener Farbtöne den hochmolekularen, organischen Stoffen neben den Verbindungen der Formel I noch Füllstoffe bzw. andere farbgebende Bestandteile, wie Weiß-, Bunt- oder Schwarzpigmente, in beliebigen Mengen zuzufügen.

Zum Pigmentieren von Lacken und Druckfarben werden die hochmolekularen organischen Materialien und die Verbindungen der Formel I gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, daß man die einzelnen Komponenten für sich oder auch mehrere gemeinsam dispergiert bzw. löst und erst hierauf alle Komponenten zusammenbringt.

Die erhaltenen Färbungen enthalten vorzugsweise 0,01–20 Gew.% Pigment, beispielsweise in Kunststoffen, Fasern, Lacken und Drucken, und zeichnen sich durch sehr große Farbstärke, hohe Sättigung, gute Dispergierbarkeit, gute Überlakkier-, Migrations-, Hitze-, Licht- und Wetterechtheit sowie durch einen guten Glanz und gutes IR-Remissionsverhalten aus.

Die Verbindungen der Formel I können auch als photoelektrophoretische Toner verwendet werden.

In den nachfolgenden Beispielen bedeuten die Teile, sofern nichts anderes angegeben wird, Gewichsteile, die Prozente Gewichtsprozente, und die Temperaturen sind in Celsisugraden angegeben.

Beispiel 1

2,4 Teile 2,5-Dichloranilin werden in 17 Vol.-Teilen Eisessig bei Raumtemperatur gelöst. Die braune Lösung wird mit 3,9 Vol.-Teilen konzentrierter Salzsäure verrührt, die entstandene dicke Suspension (Chlorhydrat) mit 8 Teilen Wasser verdünnt, auf 5° abgekühlt, während 15 Min. und bei 5° mit 3,9 Vol.-Teilen 4n-Natriumnitritlösung tropfenweise versetzt und die erhaltene braune Diazolösung klärfiltriert.

Man löst danach 4,4 Teile 2-Acetoacetylamino-6-acetaminobenzthiazol in 11,3 Vol.-Teilen 30%iger Natronlauge und 75 Teilen Wasser. Die orange Lösung wirf filtriert, auf 5° abgekühlt und innerhalb 20 Min. mit der Diazolösung tropfenweise versetzt. Es entsteht dabei ein oranger Niederschlag. Die erhaltene Suspension wird durch langsame Zugabe von 12 Vol.-Teilen 30%iger Natriumhydroxydlösung auf einen pH-Wert von 5 eingestellt. Sie wird während 4 Stunden bei einer bis auf 23° steigenden Temperatur gerührt, im Laufe einer Stunde auf 75° erhitzt und heiß abgenutscht. Der Rückstand wird salzfrei gewaschen und im Vakuum bei 80° getrocknet. Man erhält 6,9 Teile, entsprechend 99% der Theorie, eines orangen Pulvers der Formel

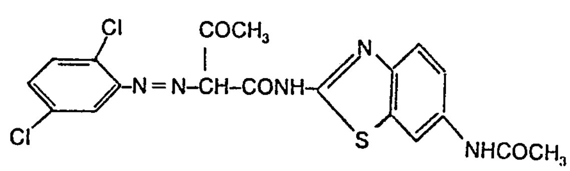

Das durch Erhitzen in 170 Vol.-Teilen Dimethylformamid während 2 Std. bei 147° nachbehandelte Pigment erzeugt in Polyvinylchlorid echte gelbe Färbungen.

In nachstehender Tabelle sind weitere erfindungsgemäße Pigmente beschrieben, die durch Kuppeln der Diazoverbindungen der Amine der Kolonne I mit den Acetessigaryliden der Amine der Kolonne II erhalten werden. Kolonne III gibt den Farbton einer mit 0,2% dieser Pigmente gefärbten PVC-Folie an.

Tabelle

| Bsp. Nr. | I | II | III |
|---|---|---|---|
| 2 | 2,4,5-Trichloranilin | 2-Amino-6-acetyl-aminobenzthiazol | grünstichiges Gelb |
| 3 | 4-Nitroanilin | 2-Amino-6-acetyl-aminobenzthiazol | Orange |
| 4 | 2-Chlor-5-trifluor-methylanilin | 2-Amino-6-acetyl-aminobenzthiazol | Gelb |
| 5 | 2-Chlor-5-nitroanilin | 2-Amino-6-acetyl-aminobenzthiazol | grünstichiges Gelb |
| 6 | 2-Amino-4-methoxy-benzolsulfonsäure-amid | 2-Amino-6-acetyl-aminobenzthiazol | grünstichiges Gelb |
| 7 | 2-Amino-terephthal-säure-dimethylester | 2-Amino-6-acetyl-aminobenzthiazol | grünstichiges Gelb |
| 8 | 3-Amino-4-chlor-benzamid | 2-Amino-6-acetyl-aminobenzthiazol | Gelb |
| 9 | 2-Chlor-4-nitroanilin | 2-Amino-6-acetyl-aminobenzthiazol | Orange |
| 10 | 3-Amino-4-chlorben-zoesäureäthylester | 2-Amino-6-acetyl-aminobenzthiazol | Gelb |
| 11 | 3-Amino-4-methyl-benzamid | 2-Amino-6-acetyl-aminobenzthiazol | grünstichiges Gelb |
| 12 | 2-Methyl-5-chlor-anilin | 2-Amino-6-acetyl-aminobenzthiazol | grünstichiges Gelb |
| 13 | 2-Methoxy-5-chlor-anilin | 2-Amino-6-acetyl-aminobenzthiazol | Gelb |
| 14 | 3-Amino-4-methyl-benzoesäureäthyl | 2-Amino-6-acetyl-aminobenzthiazol | grünstichiges Gelb |
| 15 | 3-Amino-4-methyl-benzoesäureäthyl-ester | 2-Amino-6-acetyl-aminobenzthiazol | grünstichiges Gelb |
| 16 | 2-Methoxy-5-nitroanilin | 2-Amino-6-acetyl-aminobenzthiazol | grünstichiges Gelb |
| 17 | 3-Amino-4-methoxy-benzoesäuremethyl-ester | 2-Amino-6-acetyl-aminobenzthiazol | Gelb |
| 18 | 3-Amino-4-chlor-benzoesäuremethyl-ester | 2-Amino-6-acetyl-aminobenzthiazol | Gelb |
| 19 | 2,5-Dichloranilin | 2-Amino-6-cyclo-hexanoyl-amino-benzthiazol | grünstichiges Gelb |
| 20 | 3-Amino-4-chlor-benzamid | 2-Amino-6-cyclo-hexanoyl-amino-benzthiazol | Gelb |
| 21 | 3-Amino-4-methyl-benzamid | 2-Amino-6-cyclo-hexanoyl-amino-benzthiazol | grünstichiges Gelb |
| 22 | 3-Amino-4-methyl-benzamid | 2-Amino-6-propionyl-amino-benzthiazol | grünstichiges Gelb |
| 23 | 2,5-Dichloranilin | 2-Amino-5-acetyl-amino-6-methyl-benzthiazol | grünstichiges Gelb |
| 24 | 3-Amino-4-methyl-benzamid | 2-Amino-5-acetyl-amino-6-methyl-benzthiazol | grünstichiges Gelb |
| 25 | 2,5-Dichloranilin | 2-Amino-5-methyl-6-acetylamino-benzthiazol | Gelb |
| 26 | 3-Amino-4-methyl-benzamid | 2-Amino-5-methyl-6-acetylamino-benzthiazol | grünstichiges Gelb |

Tabelle (Fortsetzung)

| Bsp. Nr. | I | II | III |
|---|---|---|---|
| 27 | 3-Amino-4-chlor-benzamid | 2-Amino-5-methyl-6-acetylamino-benzthiazol | Gelb |
| 28 | 3-Amino-4-methyl-benzamid | 2-Amino-5-chlor-6-acetyl-amino-benzthiazol | Gelb |
| 29 | 3-Amino-4-chlor-benzamid | 2-Amino-5-chlor-6-acetyl-amino-benzthiazol | Gelb |

Herstellung der Ausgangsmaterialien

1) 2-Acetoacetylamino-6-acetylamino-benzthiazol

a) 2-Amino-6-acetylamino-benzthiazol

Die Suspension aus 75,1 Teilen p-Aminoacetanilid und 81 Teilen Natriumrhodanid in 750 Vol.-Teilen Essigsäure wird auf 9° abgekühlt und in einer Stunde mit der Lösung von 25,8 Teilen Brom in 125 Vol.-Teilen Essigsäure tropfenweise versetzt. Die Temperatur steigt trotz Kühlung auf 14°. Man rührt 3 Stunden ohne Kühlung, die Temperatur steigt auf 20 °C. Die dicke, hellbeige Suspension wird abgenutscht. Das Nutschgut wird mit 200 Vol.-Teilen Essigsäure gewaschen, gut abgepresst und in 1000 Teilen Wasser von 60° gelöst. Die trübe braune Lösung wird filtriert, auf 20° abgekühlt und mit ca. 400 Vol.-Teilen 25%iger Ammoniaklösung auf pH 7 gestellt. Der ausgefallene hellgelbe Niederschlag wird schließlich abgenutscht und im Vakuum bei 80° getrocknet. Man erhält 87 Teile (83% der Theorie) eines hellgelben Pulvers vom Schmelzpunkt 228–229°.

b) 2-Acetoacetylamino-6-acetylamino-benzthiazol

78 Teile 2-Amino-6-acetylamino-benzthiazol werden in 150 Vol.-Teilen Essigsäure auf 63° erhitzt. Die ockergelbe Lösung wird in 15 Minuten mit 41 Teilen Diketen tropfenweise versetzt. Die Temperatur steigt vorübergehend auf 96°. Man rührt 2,5 Stunden bei 80°, nach ca. einer Stunde fällt ein dicker Niederschlag aus. Man läßt dann auf 29° abkühlen und verdünnt mit 300 Teilen dest. Wasser. Die dicke hellgraue Suspension wird 2 Stunden bei einer bis auf 24° sinkenden Temperatur gerührt und abgenutscht. Das Produkt wird mit 500 Teilen Wasser gewaschen und im Vakuum bei 80° getrocknet. Danach erhält man 83 Teile (75% der Theorie) eines hellgelben Pulvers vom Schmelzpunkt 248–250°.

Analyse:

| | | | | |
|---|---|---|---|---|
| Berechnet: | C 53,60 | H 4,50 | N 14,43 | S 11,01% |
| Gefunden: | C 53,2 | H 4,5 | N 14,5 | S 11,0 % |

Die meisten Kupplungskomponenten wurden nach dieser Methode hergestellt.

2) 2-Acetoacetylamino-5-acetylamino-6-methyl-benzthiazol

a) 2-Acetoacetylamino-5-nitro-6-methyl-benzthiazol

Aus 2-Amino-5-nitro-6-methyl-benzthiazol mit Diketen in Essigsäure. Ausbeute: 94% der Theorie. Das hellgelbe Pulver schmilzt bei 201–203°.

Analyse:

| | | | | |
|---|---|---|---|---|
| Berechnet: | C 49,14 | H 3,78 | N 14,33 | S 10,93% |
| Gefunden: | C 49,2 | H 3,8 | N 14,4 | S 11,0 % |

b) 2-Acetoacetylamino-5-amino-6-methyl-benzthiazol

Aus dem Nitrokörper durch katalyitsche Hydrierung (RaNi) in Dioxan. Ausbeute: 75% der Theorie. Aspekt: beiges Pulver. Der Schmelzpunkt beträgt 200 bis 202°.

Analyse:

| | | | | |
|---|---|---|---|---|
| Berechnet: | C 54,74 | H 4,98 | N 15,96 | S 12,18% |
| Gefunden: | C 54,4 | H 5,1 | N 15,7 | S 11,8 % |

c) 2-Acetoacetylamino-5-acetylamino-6-methyl-benzthiazol

Aus dem Amin mit Acetylchlorid in Chlorbenzol-Pyridin (10 : 1). Ausbeute: 74% der Theorie. Das hellgelbe Produkt schmilzt bei 220 bis 222°.

Analyse:

| | | | | |
|---|---|---|---|---|
| Berechnet: | C 55,07 | H 4,95 | N 13,76 | S 10,50% |
| Gefunden: | C 55,3 | H 4,9 | N 14,0 | S 10,8 % |

Beispiel 30

Das gemäß Beispiel 1 hergestellte Pigment wird als feuchte Ware isoliert. 30 Teile davon verrührt man in 200 Vol.-Teilen 50%igem Alkohol, rührt in einem Autoklaven 3 Stunden bei 170°, kühlt auf 20° und nutscht ab. Das Produkt weist die gleichen Eigenschaften bezüglich Nuance, Echtheiten und Habitus auf, wie das Pigment des Beispiels 1.

Beispiele 31–65

Analog Beispiel 30 kann die feuchte Ware des Beispiels 1 auch in anderen Bedingungen behandelt werden. Dann entstehen Produkte, die in ihren Eigenschaften voneinander abweichen. In

nachfolgender Tabelle gibt Kolonne I das Lösungsmittel, Kolonne II die Temperatur und Kolonne III die Zeit der Behandlung an.

Tabelle

| Bsp. Nr. | I | II | III |
|---|---|---|---|
| 31 | Wasser | 95 °C | 30 Min. |
| 32 | Wasser | 130 °C | 3 Std. |
| 33 | Methylalkohol | 60 °C | 16 Std. |
| 34 | Essigester | 68 °C | 16 Std. |
| 35 | Äthylalkohol | 80 °C | 16 Std. |
| 36 | Isopropylalkohol | 82 °C | 16 Std. |
| 37 | Methyl-isobutylketon | 86 °C | 16 Std. |
| 38 | Propylalkohol | 92 °C | 16 Std. |
| 39 | Isobutylalkohol | 95 °C | 16 Std. |
| 40 | Butylalkohol | 99 °C | 16 Std. |
| 41 | Wasser | 150 °C | 3 Std. |
| 42 | 50%iger Methylalkohol | 130 °C | 3 Std. |
| 43 | 50%iger Äthylalkohol | 130 °C | 3 Std. |
| 44 | 50%iger Isopropylalkohol | 130 °C | 3 Std. |
| 45 | 50%iger Propylalkohol | 130 °C | 3 Std. |
| 46 | 50%iger Isobutylalkohol | 130 °C | 3 Std. |
| 47 | 50%iger Butylalkohol | 130 °C | 3 Std. |
| 48 | 50%iger Methylalkohol | 150 °C | 3 Std. |
| 49 | 10%iger Äthylalkohol | 150 °C | 3 Std. |
| 50 | 10%iger Isopropylalkohol | 150 °C | 3 Std. |
| 51 | 10%iger Isobutylalkohol | 150 °C | 3 Std. |
| 52 | 10%iger Propylalkohol | 150 °C | 3 Std. |
| 53 | 50%iger Methylalkohol | 150 °C | 3 Std. |
| 54 | Wasser | 180 °C | 3 Std. |
| 55 | 10%iger Butylalkohol | 150 °C | 3 Std. |
| 56 | 10%iger Methylalkohol | 160 °C | 3 Std. |
| 57 | 10%iger Methylalkohol | 170 °C | 3 Std. |
| 58 | 10%iger Äthylalkohol | 170 °C | 3 Std. |
| 59 | 10%iger Methylalkohol | 180 °C | 3 Std. |
| 60 | 50%iger Methylalkohol | 170 °C | 3 Std. |
| 61 | 50%iger Isopropylalkohol | 170 °C | 3 Std. |
| 62 | 50%iger Isobutylalkohol | 170 °C | 3 Std. |
| 63 | 50%iger Butylalkohol | 170 °C | 3 Std. |
| 64 | 50%iger Propylalkohol | 170 °C | 3 Std. |
| 65 | 50%iger Methylalkohol | 180 °C | 3 Std. |

Das Pigment des Beispiels 1 wird in dieser Tabelle von oben nach unten immer gröber. Es wird dadurch farbschwächer, die Wetterechtheit nimmt hingegen zu.

Beispiel 66

30 Teile des gemäß Beispiel 1 hergestellten feuchten Produktes werden in 200 Vol.-Teilen o-Dichlorbenzol in 2 Stunden auf 178° erhitzt. Ab 100° destilliert das Wasser-o-Dichlorbenzol-Gemisch azeotropisch. Wenn im Destillat kein Wasser mehr nachweisbar ist, kühlt man die orange Suspension auf 80° und filtriert. Das Nutschgut wird mit o-Dichlorbenzol und 60°igem Methanol gewaschen und im Vakuum bei 60° getrocknet. Das Produkt färbt PVC in echten gelben Tönen.

Beispiel 67

4,2 Teile des Aminoazofarbstoffes der Formel

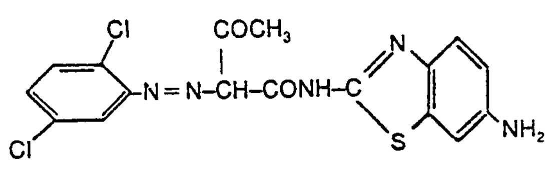

werden in 150 Vol.-Teilen o-Dichlorbenzol auf 156° erhitzt. Die dunkelbraune Lösung wird bei dieser Temperatur in ca. einer Minute mit der Lösung von 1,2 Teilen Essigsäureanhydrid in 50 Vol.-Teilen o-Dichlorbenzol versetzt. Nach ca. 2 Minuten fällt ein oranger Niederschlag aus. Man rührt

die Suspension 30 Minuten bei 160°, kühlt auf 82° und filtriert heiss. Das Nutschgut wird mit o-Dichlorbenzol und 60°igem Methanol gewaschen und getrocknet. Man erhält 4,3 Teile, entsprechend 91% der Theorie, eines orangen Pulvers der Formel

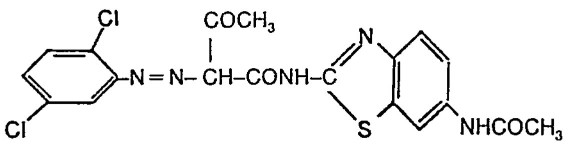

Dieses Produkt und das Pigment des Beispiels 1 sind miteinander identisch.

Darstellung des Aminoazofarbstoffes:

a) 2-Acetoacetylamino-6-nitro-benzthiazol

Aus 2-Amino-6-nitro-benzthiazol mit Diketen in Essigsäure. Ausbeute: 93% der Theorie. Aspekt: weißes PUlver. Der Schmelzpunkt beträgt 246 bis 248°.

Analyse:

| | | | | |
|---|---|---|---|---|
| Berechnet: | | | | |
| | C 47,31 | H 3,25 | N 15,05 | S 11,48% |
| Gefunden: | | | | |
| | C 47,2 | H 3,2 | N 15,2 | S 11,5 % |

b) Nitroazofarbstoff der Formel

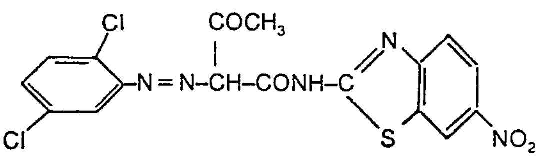

Aus 2-Acetoacetylamino-6-nitro-benzthiazol und diazotiertem 2,5-Dichloranilin. Ausbeute: 84% der Theorie. Der Schmelzpunkt des braungelben Produktes liegt über 300°.

Analyse:

| | | | | | |
|---|---|---|---|---|---|
| Berechnet: | | | | | |
| | C 45,15 | H 2,45 | Cl 15,68 | N 15,49 | S 7,09% |
| Gefunden: | | | | | |
| | C 45,2 | H 2,7 | Cl 15,2 | N 15,2 | S 7,1 % |

c) Aminoazofarbstoff

Aus dem entsprechenden Nitroazofarbstoff durch katalytische Reduktion (RaNi) in Dimethylformamid.

Austeute: 73% der Theorie. Schmelzpunkt des rotbraunen Pulvers: 272–275° (Zersetzung).

Analyse:

| | | | | | |
|---|---|---|---|---|---|
| Berechnet: | | | | | |
| | C 48,35 | H 3,10 | Cl 16,79 | N 16,58 | S 7,59% |
| Gefunden: | | | | | |
| | C 48,0 | H 3,2 | Cl 16,3 | N 16,3 | S 7,5 % |

Beispiel 68 (Weich-Polyvinylchlorid)

0,6 Teile des gemäß Beispiel 1 erhaltenen Pigments werden mit 67 g Polyvinylchlorid, 33 g Dioctylphthalat, 2 g Dibutylzinndilaurat und 2 g Titandioxyd zusammengemischt und auf dem Walzenstuhl während 15 min bei 160° zu einer dünnen Folie verarbeitet. Die so erzeugte gelbe Färbung ist farbstark, migrations- und lichtecht.

Beispiel 69 (Harnstoff-Formaldehyd-Harz)

100 Teile eines pulverförmigen Formaldehyd-Harnstoffharzes, das für Preßmassen geeignet ist, 10 Teile Lithopone und 1 Teil des nach Beispiel 1 hergestellten Pigments werden in einer Kügelmühle 16 Stunden gemahlen. Danach wird die Masse bei 140–160° in Formen gepreßt. Die gelben Preßlinge besitzen gute Licht- und Hitzebeständigkeit.

Beispiel 70 (Harnstoff-Formaldehyd-Lack)

15 Teile einer 35% Butanol enthaltenden Kolloidwolle, 15 Teile eines mit Ricinusöl modifizierten Phthalatharzes, 15 Teile einer 70%igen butanolischen Lösung eines Harnstofflackes, 20 Teile Butylacetat, 10 Teile Glykolmonoäthylester, 20 Teile Toluol und 5 Teile Alkohol werden zu einem Lack verarbeitet. Dieser wird anschliessend mit 2 Teilen des gemäß Beispiel 1 erhaltenen Pigmentes und 2 Teilen Titandioxid (Rutil) pigmentiert und gemahlen. Nach dem Spritzen auf Karton und Trocknen des Lackes erhält man einen gelben Überzug von sehr guter Licht-, Überlackier- und Wetterechtheit.

Beispiel 71 (Alkyd-Melamin-Einbrennlack)

60 Teile einer 60%igen Lösung eines nichttrocknenden Alkylharzes in Xylol (Handelsname Beckosol® 27–320 der Firma Reichhold-Albert-Chemie), 36 Teile einer 50%igen Lösung eines Melamin-Formaldehyd-Harzes in einem Alkohol-Aromaten-Gemisch (Handelsname Super-Beckamin® 13–501 der Firma Reichhold-Albert-Chemie), 2 Teile Xylol und 2 Teile Methylcellosolve werden vermischt und 100 Teile dieses Gemisches werden mit Hilfe eines Rührers zu einer homogenen Lacklösung verrührt. 95 Teile des so erhaltenen Klarlackes und 5 Teile des gemäß Beispiel 1 erhaltenen Pigmentes werden in einer Kugelmühle während 72 Stunden gemahlen. Der eingefärbte Lack wird dann nach üblicher Spritzmethode auf Blech appliziert und 30 min bei 120° eingebrannt. Man erhält eine gelbe Lackierung von guter Lichtechtheit.

Beispiel 72 (Acryl-Melamin-Einbrennlack)

41,3 Teile einer 60%igen Lösung eines Acrylharzes in Xylol (Handelsname Viacryl® VC 373 der Firma Vianova), 16,3 Teile einer 55%igen Lösung eines Melamin-Formaldehyd-Harzes in Butanol (Handelsname Maprenal® TTX der Firma Bayer), 32,8 Teile Xylol, 4,6 Teile Äthylglykolacetat, 2 Teile Cyclohexanon, 2 Teile Butylacetat und 1 Teil Siliconöl A (1% in Xylol) der Firma Bayer werden mit Hilfe eines Rührers zu einer homogenen Lacklösung verrührt. 95 Teile des so erhaltenen Klarlakkes, 5 Teile des gemäß Beispiel 1 erhaltenen Pigmentes werden in einer Kugelmühle während 72 Stunden gemahlen. Der eingefärbte Lack wird dann nach üblicher Spritzmethode auf Blech appliziert und 30 Minuten bei 120° eingebrannt. Man

erhält eine gelbe Lackierung von guter Lichtechtheit.

**Patentansprüche**

1. Monoazopigmente der Formel I

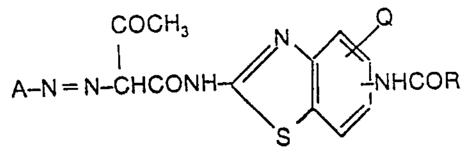 (I),

worin A einen Rest der Formel

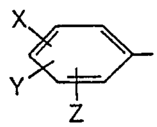

bedeutet, worin X und Y Wasserstoff- oder Halogenatome, Nitro-, Cyan-, Carbamoyl- oder Sulfamoylgruppen, Alkyl-, Alkoxy-, Alkylsulfonyl-, Alkoxycarbonyl-, Alkanoyl-, Alkoxysulfonyl- oder Alkylsulfamoylgruppen, enthaltend 1–6 Kohlenstoffatome, gegebenenfalls durch Halogenatome, Alkyl- oder Alkoxygruppen, enthaltend 1–4 Kohlenstoffatome, oder Trifluormethylgruppen substituierte Phenoxy-, Phenylsulfonyl-, Phenoxycarbonyl-, Benzoyl- oder Phenylsulfamoylgruppen und Z ein Wasserstoff- oder Halogenatom oder eine Alkylgruppe, enthaltend 1–4 Kohlenstoffatome, bedeuten, R eine $C_1$–$C_6$-Alkyl- oder $C_5$–$C_8$-Cycloalkylgruppe und Q ein H- oder Halogenatom oder eine Methylgruppe bedeuten.

2. Verfahren zur Herstellung von Monoazopigmenten gemäß Anspruch 1, dadurch gekennzeichnet, daß man ein diazotiertes carbocyclisches, aromatisches Amin der Formel

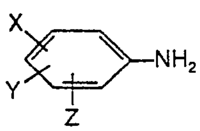

worin X, Y und Z die in Anspruch 1 angegebene Bedeutung haben, mit einem Acetoacetylaminobenzthiazol der Formel

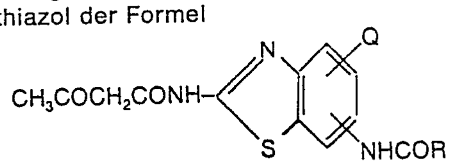

kuppelt, worin Q und R die in Anspruch 1 angegebene Bedeutung haben.

3. Verwendung von Monoazopigmenten der Formel I, gemäß Anspruch 1, zum Pigmentieren von hochmolekularem organischem Material.

**Claims**

1. A monoazo pigment of the formula I

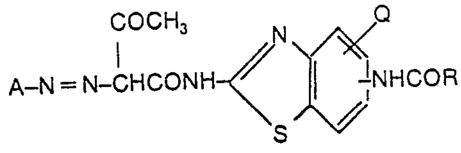 (I),

wherein A is a radical of the formula

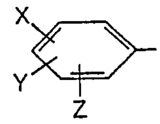

wherein X and Y are hydrogen or halogen atoms, nitro, cyano, carbamoyl or sulfamoyl groups; alkyl, alkoxy, alkylsulfonyl, alkoxycarbonyl, alkanoyl, alkoxysulfonyl or alkylsulfamoyl groups, containing 1–6 carbon atoms, phenoxy, phenylsulfonyl, phenoxycarbonyl, benzoyl or phenylsulfamoyl groups which are unsubstituted or substituted by halogen atoms, alkyl or alkoxy groups containing 1–4 carbon atoms or by trifluoromethyl groups, and Z is a hydrogen or halogen atom or an alkyl group containing 1–4 carbon atoms, R is a $C_1$–$C_6$alkyl group or a $C_5$–$C_8$cycloalkyl group and Q is a hydrogen or halogen atom or a methyl group.

2. A process for the preparation of a monoazo pigment according to claim 1, which comprises coupling a diazotised carbocyclic aromatic amine of the formula

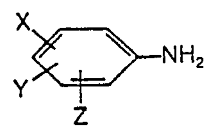

wherein X,Y and Z are as defined in claim 1, with an acetoacetylaminobenzothiazole of the formula

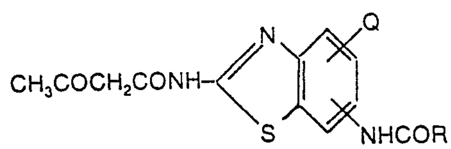

wherein Q and R are as defined in claim 1.

3. Use of a monoazo pigment of the formula I according to claim 1 for pigmenting high molecular weight organic material.

**Revendications**

1. Pigments mono-azoïques répondant à la formule I:

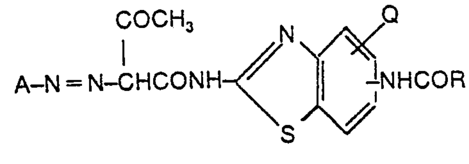 (I),

dans laquelle

A représente un radical répondant à la formule:

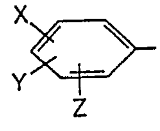

dans laquelle X et Y représentent chacun un atome d'hydrogène ou d'halogène, un radical nitro, cyano, carbamoyle ou sulfamoyle, un radical alkyle, alcoxy, alkylsulfonyle, alcoxycarbonyle, alcanoyle, alcoxysulfonyle ou alkylsulfamoyle contenant de 1 à 6 atomes de carbone, ou un radical phénoxy, phénylsulfonyle, phénoxycarbonyle, benzoyle ou phénylsulfamoyle éventuellement porteur d'un atome d'halogène, d'un radical alkyle ou alcoxy en $C_1$–$C_4$ ou d'un radical trifluorométhyle, et Z représente un atome d'hydrogène, un atome d'halogène ou un radical alkyle contenant de 1 à 4 atomes de carbone,

R représente un alkyle en $C_1$–$C_6$ ou un cycloalkyle en $C_5$–$C_8$ et

Q représente un atome d'hydrogène, un atome d'halogène ou un radical méthyle.

2. Procédé de préparation de pigments mono-azoïques selon la revendication 1, procédé caractérisé en ce qu'on copule un diazoïque d'une amine carbocyclique répondant à la formule:

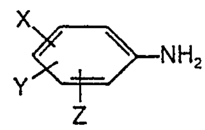

dans laquelle X, Y et Z ont les significations qui leur ont été données à la revendication 1, avec un acétoacétylaminobenzothiazole répondant à la formule:

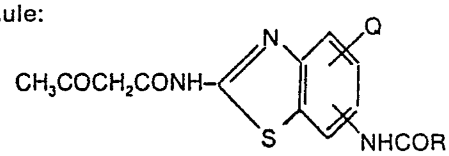

dans laquelle Q et R ont les significations qui leur ont été données à la revendication 1.

3. Application de pigments mono-azoïques de formule I selon la revendication 1 à la pigmentation de matières organiques macromoléculaires.